# EUROPEAN PATENT APPLICATION

(11) **EP 4 529 179 A1**
(43) Date of publication of application: **26.03.2025**
(21) Application number: 23888039.7
(22) Date of filing: 08.11.2023
(51) Int. Cl.: H04N 21/2187

(54) **LIVESTREAMING PROCESSING METHOD AND APPARATUS, AND ELECTRONIC DEVICE**

(30) Priority: 08.11.2022 CN 202211394580
(71) Applicant: Beijing Zitiao Network Technology Co., Ltd., Beijing 100190 (CN)
(72) Inventor: FAN, Teng, Beijing 100028 (CN); LU, Han, Beijing 100028 (CN)
(74) Representative: Williams, Michael David
(86) International application number: PCT/CN2023/130433
(87) International publication number: WO 2024/099350

(57) **Abstract**

Embodiments of the present disclosure relate to a livestreaming processing method and apparatus, and an electronic device. The livestreaming processing method according to the embodiments of the present disclosure comprises: displaying a livestreaming room interface; displaying a first interaction control in the livestreaming room interface; and updating the display state of the first interaction control according to real-time livestreaming result information of livestreaming content of current livestreaming object in a livestreaming room. Therefore, a new interaction mode is provided.

## Description

### CROSS-REFERENCE TO RELATED APPLICATIONS

The present application claims priority to and is based on a Chinese application with an application number 202211394580.8 and a filing date of November 08, 2022, the aforementioned application is hereby incorporated by reference in its entirety.

### FIELD OF THE INVENTION

The invention relates to the field of computer technology, in particular relates to a live streaming processing method, apparatus and electronic device.

### BACKGROUND

With the development of computer, users can use electronic devices to realize various functions. For example, users can perform live streaming through electronic devices, and live streaming content can include, but not limited to, online karaoke or dancing.

In some scenarios, users can order songs and perform live singing in the live-stream room. When users perform live streaming content interpretation in the live-stream room, other users can listen online or participate in interaction. Therefore, it can simulate a scenario where the interpretation is performed in an offline place (KTV) that provides audio-visual equipment and solfeggio space.

### DISCLOSURE OF THE INVENTION

The present disclosure OF THE INVENTION is provided to introduce concepts in a brief form, which will be described in detail in the DETAILED DESCRIPTION OF PREFERRED EMBODIMENTS later. The present disclosure OF THE INVENTION is not intended to identify key features or essential features of the claimed technical solutions, nor intended to limit the scope of the claimed technical solution.

In a first aspect, an embodiment of the present disclosure provides a live streaming processing method, which includes: displaying a live-stream room interface; displaying a first interactive control in the live-stream room interface; updating a display state of the first interactive control, according to real-time live streaming result information of live streaming content of a current live streaming object in the live-stream room.

In a second aspect, an embodiment of the present disclosure provides a live streaming processing apparatus, which includes a first display unit configured to display a live-stream room interface; a second display unit configured to display a first interactive control in the live-stream room interface; and a third display unit configured to update a display state of the first interactive control, according to the real-time live streaming result information of live streaming content of a current live streaming object in the live-stream room .

In a third aspect, an embodiment of the present disclosure provides an electronic device including one or more processors; a storage device for storing one or more programs, wherein the one or more programs, when executed by the one or more processors, cause the electronic device to execute the live streaming processing method as described in the first aspect.

In a fourth aspect, an embodiment of the present disclosure provides a computer-readable medium on which a computer program is stored, which, when executed by a processor, implements the live streaming processing method as described in the first aspect.

In a fifth aspect, an embodiment of the present disclosure provides a computer program comprising instructions which, when executed by a processor, implement the live streaming processing method as described in the first aspect.

In a sixth aspect, an embodiment of the present disclosure provides a computer program product comprising instructions which, when executed by a processor, implement the live streaming processing method as described in the first aspect.

### DESCRIPTION OF THE DRAWINGS

The above and other features, advantages and aspects of embodiments of the present disclosure will become more apparent by referring to the following detailed description when taken in conjunction with the accompanying drawings. Throughout the drawings, the same or similar reference numerals indicate the same or similar elements. It should be understood that the drawings are schematic and elements in the drawings are not necessarily drawn to scale.
Fig. 1 is a flowchart of an embodiment of a live streaming processing method according to the present disclosure;
Figs. 2A and 2B are schematic diagrams of an application scenario of a live streaming processing method according to the present disclosure;
Fig. 3 is a schematic diagram of an application scenario of a live streaming processing method according to the present disclosure;
Figs. 4A, 4B and 4C are schematic diagrams of an application scenario of a live streaming processing method according to the present disclosure;
Fig. 5 is a schematic diagram of an application scenario of a live streaming processing method according to the present disclosure;
Fig. 6 is a structural schematic diagram of an embodiment of a live streaming processing apparatus according to the present disclosure;
Fig. 7 is an exemplary system architecture in which a live streaming processing method of an embodiment of the present disclosure can be applied;
Fig. 8 is a schematic diagram of a basic structure of an electronic device provided according to an embodiment of the present disclosure.

### DETAILED DESCRIPTION OF PREFERRED EMBODIMENTS

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged among multiple devices the embodiments of the present disclosure are only used for illustrative purposes, and are not used to limit the scope of these messages or information.

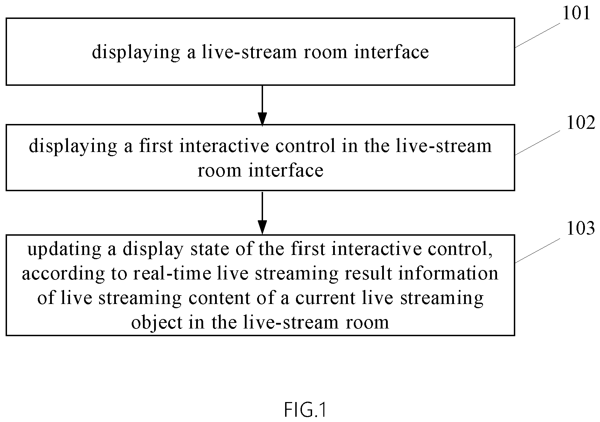

Please refer to Fig. 1, which shows a flow of an embodiment of the live streaming processing method according to the present disclosure. As shown in Fig. 1, the live streaming processing method may comprise the following steps:
Step 101: displaying a live-stream room interface.

Here, the live-stream room interface indicates a live-stream room. The live-stream room interface can show a situation in the live-stream room.

Optionally, the live-stream room interface can be displayed on terminals of various participating users. For example, the live-stream room interface can be displayed at one or more of viewer terminal, streamer terminal and guest terminal.

As an example, the live-stream room can have the function of ordering songs, that is, users can perform live singing in the live-stream room, and other users can listen, watch or participate in.

Step 102: displaying a first interactive control in the live-stream room interface.

Here, the first interactive control can be used by a user to interact with the live-stream room interface. Optionally, the first interactive control can be displayed at any position in the live-stream room interface. The first interactive control can be displayed in a floating style, and the position of the first interactive control can be moved in response to the user's moving operation.

Step 103: updating a display state of the first interactive control, according to real-time live streaming result information of live streaming content of a current live streaming object in the live-stream room.

Here, the current live streaming object can be a current performer in the live-stream room, and the performance can be, for example, singing, dancing, poetry reading, answering questions, etc., without specific restrictions.

As an example, through an electronic device, users can browse the live-stream room, determine live streaming content in the live-stream room, and conduct live streaming. Through an electronic device, other users in the live-stream room can browse the live-stream room, while listening to the live streaming content being live streamed in the live-stream room.

Here, the content being live streamed in the live-stream room can be called the live streaming content. The live streaming content can be the performance content of the current performer, such as singing content, dancing content, poetry reading content, answering content and so on.

Here, the real-time live streaming result information of the live streaming content can be generated through a preset result generation mechanism in real time. It can be understood that the above result generation mechanism can be set according to an actual application scenario, without any restrictions; as an example, the above result generation mechanism can be set according to whether the user's pitch, beat are correct or not, as well as the articulation clarity, and generate the real-time live streaming result information of the live streaming object singing songs, for example, a singing score.

Optionally, the basis of generating the real-time live streaming result information, that is, which live streaming clip is selected to generate the result information, can also be set according to actual needs.

As an example, a live streaming clip of 30 seconds before the current moment can serve as the scoring basis to get the real-time live streaming result information.

As an example, a current live streaming clip, such as a lyric of a song or an action of a dance, can serve as the scoring basis to get the real-time live streaming result information.

It should be noted that in the interactive mode provided by this embodiment, by displaying the first interactive control in the live-stream room interface; updating a display state of the first interactive control, according to real-time live streaming result information in the live-stream room, that is, the live streaming result information can be generated according to the content in the live-stream room in real time, so that the user can be informed of instant message for the user to know the live streaming result, and the display state of the first interactive control can reflect the change of the real-time live streaming result information, the user's attention to the real-time live streaming result information and to the change of the real-time live streaming result information can be improved, so that the user's efficiency of obtaining information can be improved.

In some embodiments, the method may further include displaying a first interface in response to a trigger operation on the first interactive control.

In some embodiments, the first interface displays live streaming list information corresponding to the live streaming content.

Here, the above-mentioned live streaming list information can be generated according to the live streaming result information of the live streaming content.

Here, the live streaming result information for generating the live streaming list information may include the result information obtained by at least one user live streaming the live streaming content in the live-stream room (the current live-stream room, or all live-stream rooms including the current live-stream room and other live-stream rooms). That is, the live streaming results of users who have participated in the completion of the live streaming content in a historical period, such as a score list of users who have participated in singing the song.

As an example, the live streaming list information may include live streamer identifiers and the corresponding live streaming result information.

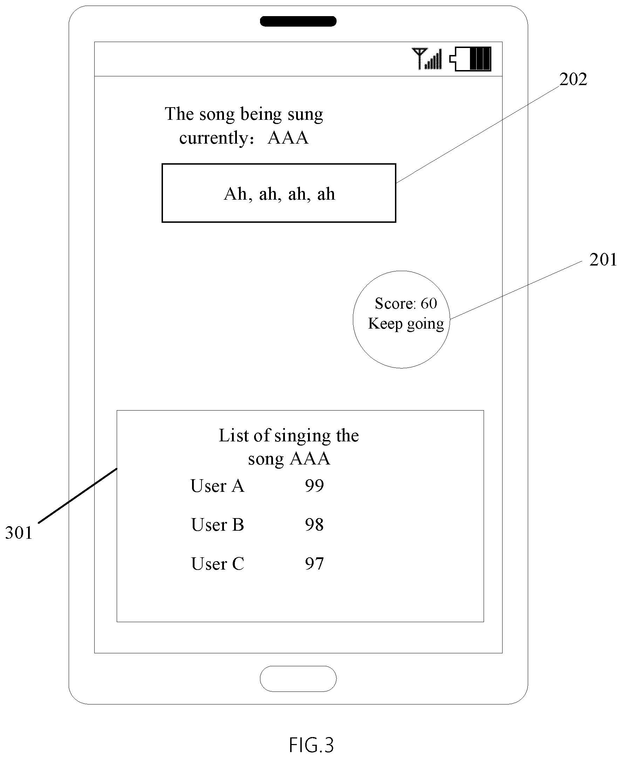

As an example, reference can be made to Fig. 3, which shows a schematic diagram of live streaming list information of live streaming content AAA in the first interface. In Fig. 3, the first interface 301 shows that user A scores 99, user B scores 98 and user C scores 97.

It should be noted that by displaying the list information of the live streaming content, the user can be prompted of the result information of the live streaming content in the historical live streaming process, so that the user can understand the difficulty of the live streaming content, so that the user can give an objective evaluation, or the user can be encouraged to participate in the live streaming.

In some embodiments, the interface content of the first interface can be generated according to preset configuration information.

Here, the preset configuration information can be configured as required. Through flexible configuration of the preset configuration information, different interface contents can be given to the first interface in different periods.

It should be noted that in the interactive mode provided by the embodiment, by means of the first interactive control, it can not only update the display state, so as to clearly prompt the real-time live streaming result information of the live streaming content; but also be used as an entrance to trigger the display of the first interface, and the content of the first interface can be updated according to the different preset configuration information. Therefore, the utilization efficiency of the interface can be improved, and various functions can be realized by using the control area of the first interactive control; moreover, the first interface is displayed in response to a trigger on the first interactive control (instead of being directly displayed), which can be displayed when the user wants to further view information, saving display resources and communication resources. In other words, a lot of display resources and communication resources will be wasted when the display is still performed even when the user does not need to view information.

In some embodiments, the above step 103 may include: according to the real-time live streaming result information of the live streaming content of the current live streaming object in the live-stream room, displaying the real-time live streaming result information and/or live streaming feedback information corresponding to the real-time live streaming result information on the first interactive control.

In some embodiments, the display state may include real-time live streaming result information.

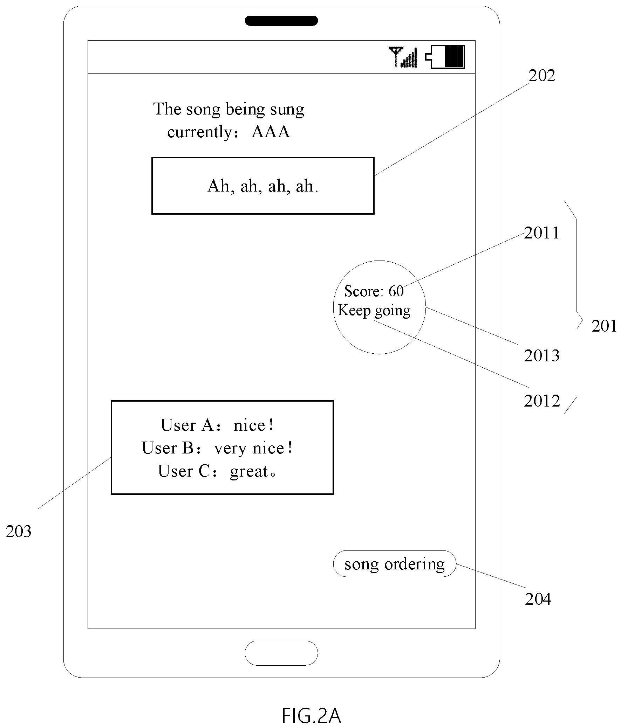

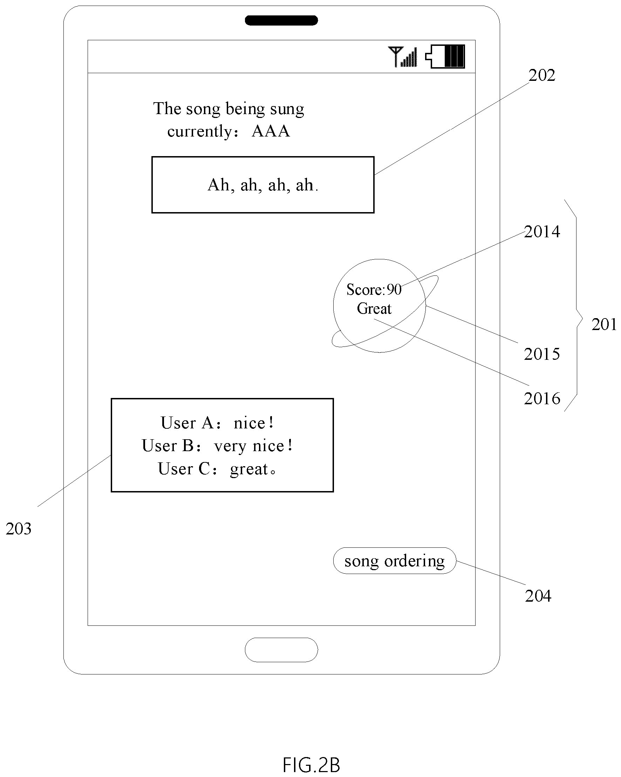

As an example, reference can be made to Fig. 2A and Fig. 2B. Fig. 2A shows the display state of the first interactive control when the real-time live streaming result information scores 60, and Fig. 2B shows the display state of the first interactive control when the live streaming result information scores 90.

In Fig. 2A and Fig. 2B, the live-stream room interface may include a first interactive control 201, a lyric prompting area 202, a comment display area 203 and a song ordering control 204. The first interactive control 201 can update the display state. The lyrics prompting area 202 can be used to prompt live streaming content. The comment display area 203 can display the comments from users on the current live streaming content in the live-stream room. The song ordering control 204 can be used by the users to order songs.

In Fig. 2A, the real-time live streaming result information 2011, namely the score 60, is shown. In Fig. 2B, the real-time live streaming result information 2014, namely the score 90, is shown.

It should be noted that by displaying the real-time live streaming result information on the first interactive control, the user can be clearly prompted of the live streaming level of the current live streaming clip, which is convenient for the user to make timely adjustment to improve the live streaming level.

In some embodiments, the display state includes live streaming feedback information.

Here, the live streaming feedback information corresponding to the real-time live streaming result information may include information serves as feedback to the real-time live streaming result information.

In some embodiments, the live streaming feedback information may include live streaming recommendation information for the live streaming content, and/or the live streaming result information may include evaluation information for the live streaming content.

Here, the live streaming recommendation information can be used to prompt the user of a live streaming improvement mode.

In some embodiments, the live streaming content of the current live streaming includes the singing content of the current live streaming user in the live-stream room, the live streaming result information is scoring information corresponding to the singing content, and the live streaming feedback information is singing recommendation information for the singing content.

As an example, please refer to Fig. 2A and Fig. 2B. Fig. 2A shows the evaluation information 2012 on the first interactive control when the live streaming result information scores 60, that is, keep going. Fig. 2B shows the evaluation information 2015 on the first interactive control when the live streaming result information scores 90, that is, it is great.

It should be noted that by updating the live streaming feedback information of the first interactive control according to the real-time live streaming result information, users can be encouraged or motivated by different live streaming feedback information, so that it is possible to implement encouragement for the live streaming state of users.

It should be noted that by updating the live streaming recommendation information of the first interactive control according to the real-time live streaming result information, users can obtain live streaming improvement recommendation in real time, so as to adjust the live streaming mode in real time and improve the live streaming effect.

In some embodiments, the above method can be applied to a client corresponding to the current live streaming object; the live streaming content includes a plurality of clips. The real-time live streaming result information includes live streaming result information corresponding to the plurality of clips.

In some embodiments, the method further includes displaying a target control corresponding to a first target clip among a plurality of target clips; in response to a trigger operation on the first target control, displaying a recording interface for the first target clip, to re-record the target clip.

As an example, the user may not perform as expected during live streaming of the target clip, and from the real-time live streaming result information, the user may not be satisfied. At this time, the target control can be displayed, and the target control can be used to trigger the re-recording of the target clip. Therefore, the user can quickly start the live streaming again according to the real-time live streaming result information, with simple interaction and convenient operation, so as to achieve satisfactory recording of the target clip as soon as possible.

In some embodiments, the display state includes a display style.

Optionally, the display style includes, but not limited to, at least one of the following: control color, control shape and control size.

In some embodiments, a display style may correspond to a live streaming result information interval. For example, the live streaming result information includes 100 natural numbers from 1 to 100. From 1 to 10 is a first live streaming result information interval, from 11 to 20 is a second live streaming result information interval, and so on, and from 91 to 100 is the 10th live streaming result information interval; for each live streaming result information interval, a display style corresponding to the live streaming result information interval can be set.

In some embodiments, step 103 includes updating the display style of the first interactive control according to the updating of the real-time live streaming result information.

As an example, please refer to Figs. 2A and 2B. The display style 2013 shown in Fig. 2A includes that the shape of the first interactive control is circular. In Fig. 2B, the displayed display style 2016 includes that the first interactive control includes a circle and a line matching the circle.

It should be noted that by updating the display style of the first interactive control according to the real-time live streaming result information, users can be reminded of the live streaming result information more explicitly via the display style, so as to implement encouragement of the user's live streaming state.

In some embodiments, the above method can be applied to a client corresponding to the current live streaming object and/or a client corresponding to the live streamer. Whether the current live streaming object is the streamer or not, multiple interface type identifiers can be displayed in real time on the client corresponding to the streamer, on the client of the current live streaming object, or on the client corresponding to the streamer and the client of the current live streaming object.

The live streaming content includes singing content.

The method further includes displaying a plurality of interface type identifiers.

Here, the interface type identifier is used to indicate the display style of the live streaming content on the live-stream room interface, and the plurality of interface type identifiers include a result display type identifier, a stage display type identifier and a lyric display type identifier.

Here, the display style of the live streaming content in the live-stream room interface indicated by the result display type identifier may include displaying live streaming result information (such as score information) corresponding to the live streaming content. As an example, the live streaming result information may include a singing score.

Here, the display style of the live streaming content in the live-stream room interface indicated by the stage display type identifier may include displaying a stage pattern in the live-stream room interface.

Here, the display style of the live streaming content in the live-stream room interface indicated by the lyric display type identifier may include displaying the lyrics corresponding to the live streaming content in the live-stream room interface.

In some embodiments, the displaying the first interactive control in the live-stream room interface may include in response to an operation of selecting the result display type identifier, displaying a first interactive control corresponding to the result display type in the live-stream room interface.

The first interactive control corresponding to the result display type can display the real-time live streaming result information.

It should be noted that by displaying a plurality of interface type identifiers, and determining the style of displaying the live streaming content in the live-stream room interface according to the user's selection, users can be provided with a variety of interface choices, so that the live-stream room interface can meet the user's demands and improve the user's live streaming efficiency.

In some embodiments, the method may further include displaying live streaming content information of live streaming content in a first interface, in response to a trigger operation on the first interactive control.

Here, the live streaming content information of the live streaming content can be used to indicate the relevant situation of the live streaming content.

As an example, the above-mentioned live streaming content information may include, but not limited to, at least one of the following: lyrics, live streaming content comments, and live streaming content authoring information. The live streaming content authoring information may include, but not limited to, at least one of the following: original singer, lyricist and composer.

It should be noted that by displaying the live streaming content information in the first interface, when a user wants to know more about the live streaming content, the user can be provided with the relevant information of the live streaming content in time, so that the user can quickly obtain further the live streaming content information. Moreover, the live streaming content information is displayed in response to the user's trigger, and the live streaming content information can be not displayed when the user has no need for further knowing the live streaming content information, thus leaving the interface space for displaying the live streaming content information to other information and improving the interface utilization rate.

In some embodiments, step 103 includes displaying a first interface in response to a trigger operation on the first interactive control. Wherein, the first interface displays activity information of the live-stream room therein.

Here, the above activity information can include some activities that is being held now or will be held in the future in the live-stream room, for example, a karaoke contest in the live-stream room.

It should be noted that by displaying the activity information of the first interface, the user can be provided with the activity information in time when the user wants to know more about the activities in the live-stream room, so that the user can quickly obtain further information about the activities in the live-stream room. Moreover, the activity information is displayed in response to the user's trigger, and the activity information can be not displayed when the user has no need for further knowing the activity information, thus leaving the interface space for displaying the activity information to other information and improving the interface utilization rate.

In some embodiments, an interface entrance control can be displayed in the live-stream room interface, and can trigger displaying a live streaming content selection interface. The method may also include displaying a live streaming content selection interface in response to a trigger operation on an interface entrance control displayed in the live-stream room interface, wherein the live streaming content selection interface includes a second interactive control.

In some embodiments, the method may further include displaying a second interface in response to a trigger operation on the second interactive control.

Here, the second interface may include a third interactive control and a fourth interactive control.

In some embodiments, the method may further include at least one of the following: displaying information about live streaming content in the live-stream room that has been selected and to be completed, in response to a trigger operation on the third interactive control; displaying information about live streaming content in the live-stream room that has been completed, in response to a trigger operation on the third interactive control.

Here, the information about live streaming content that has been selected and to be completed may include information about the live streaming content in the live-stream room that has been selected but not live-streamed yet.

Here, the information about live streaming content that has been completed may include information about the live streaming content in the live-stream room that has been live-streamed.

In some embodiments, the live streaming content may include singing content.

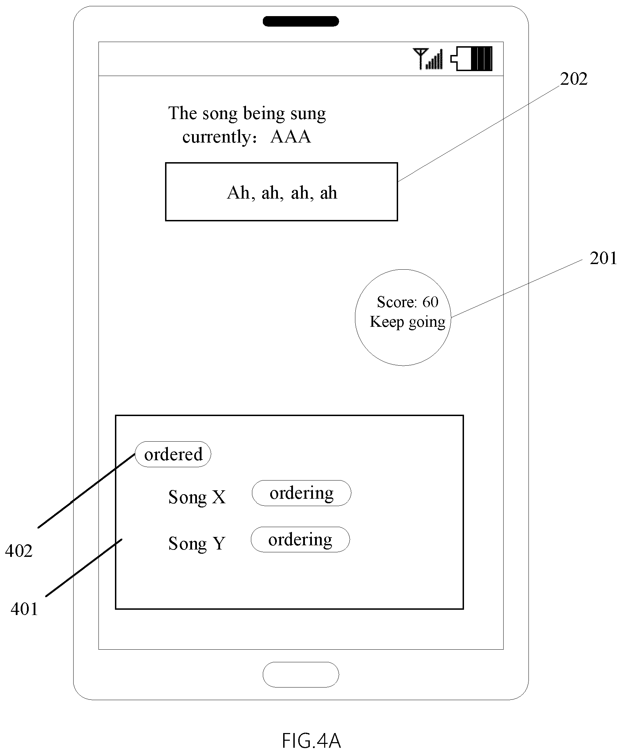

As an example, the user can trigger a song ordering control 204 in the live-stream room interface shown in Fig. 2A. In response to the triggering for the song ordering control 204, a song ordering sub-interface 401 shown in Fig. 4A can be displayed. The song ordering sub-interface 401 may include a second interactive control 402. The song ordering sub-interface 401 shows that the song ordering can be made for the live streaming content X, or can be made for the live streaming content Y.

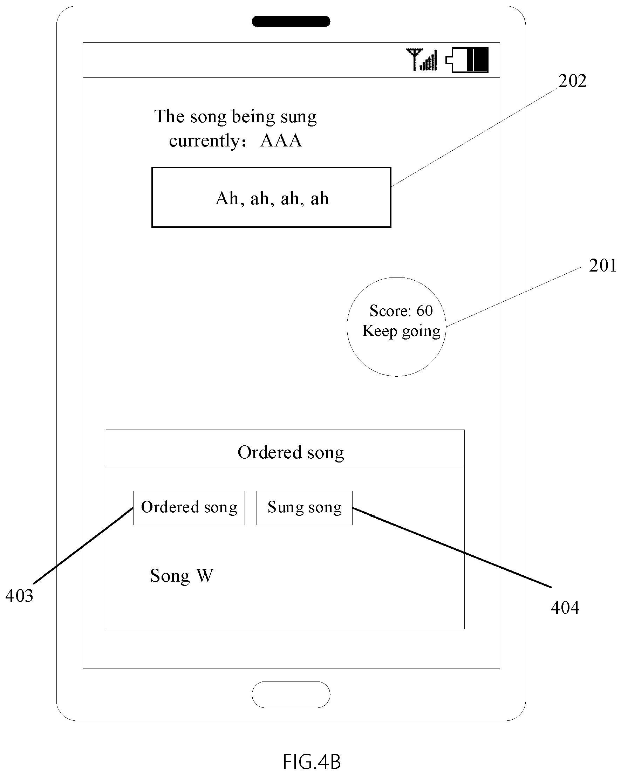

As an example, when the user triggers the second interactive control 402, an interface of displaying the selected live streaming content as shown in Fig. 4B can be displayed. The interface of displaying the selected live streaming content may include a third interactive control 403 and a fourth interactive control 404.

As an example, as shown in Fig. 4B, the user triggers the third interactive control 403, which can show the information about live streaming content in the live-stream room that has been selected and to be completed, such as a song W.

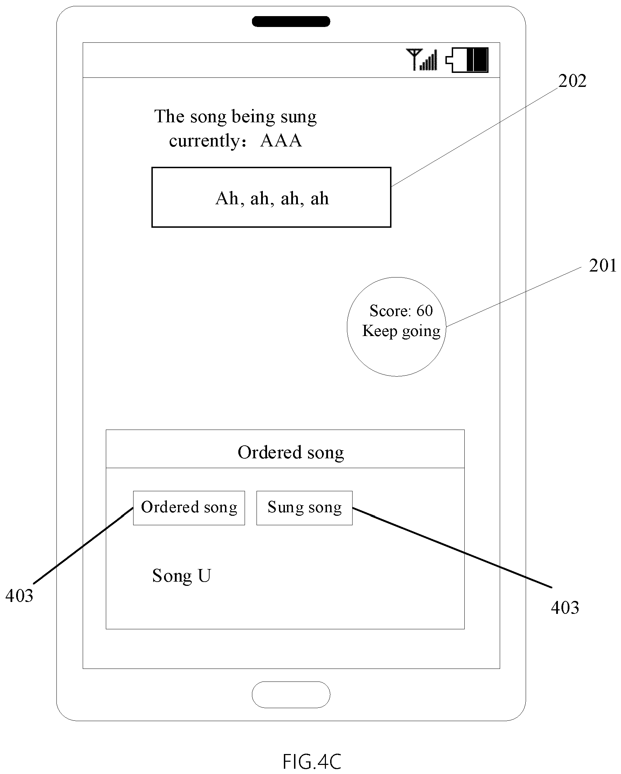

As an example, as shown in Fig. 4C, the user triggers the fourth interactive control 404, which can show the information about live streaming content in the live-stream room that has been completed, such as a song U.

It should be noted that by dividing the live streaming content selected in the live-stream room interface into two controls, namely, the live streaming content that has been selected and to be completed and the live streaming content that has been completed, the user can be prompted of the situation about the live streaming content that has been live-streamed and the upcoming live streaming content in the live-stream room, which improves the user's understanding of the live-stream room, enabling the user to operate in the live-stream room quickly and reducing the user's cost of information acquisition.

In some embodiment, that method may further include: in response to the end of live streaming of the live streaming content, displaying a second target clip of the live streaming content.

The live streaming content may include a plurality of clips.

Here, the second target clip can be determined according to the real-time live streaming result information corresponding to the plurality of clips.

It can be understood that the live streaming content may include multiple clips. Users may have different live streaming result information for different clips. A target clip can be selected from the plurality of clips of live streaming content according to the result information corresponding to respective clips.

In some embodiments, the second target clip may include at least one of a lyric fragment and a live streaming clip.

Here, the lyric fragment may include the lyrics of the clip.

Here, the live streaming clip may include the live recording of the clip by the user.

In some embodiments, when the live streaming content includes singing content, that is, singing songs, the lyric fragment is the lyric corresponding to a clip corresponding to the highest real-time live streaming result information.

In some embodiments, the target clip is a clip in the live streaming content corresponding to the high real-time live streaming result information.

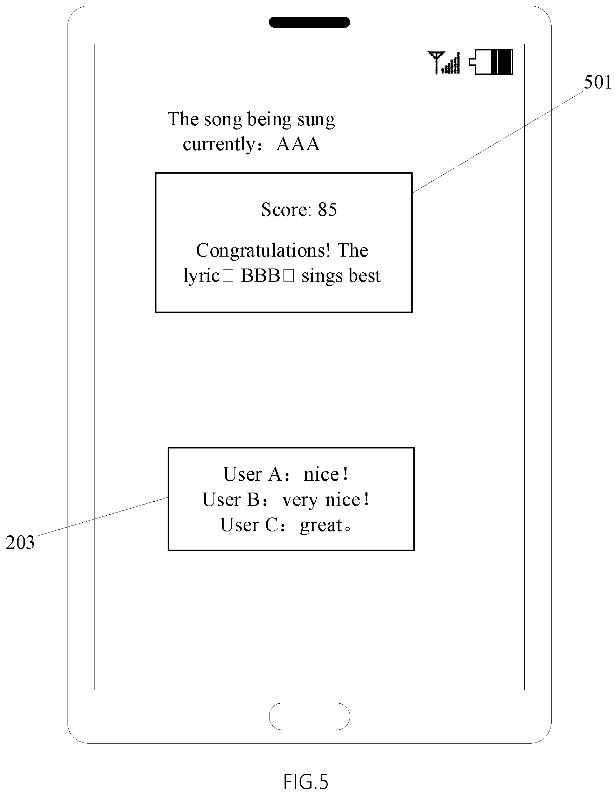

As an example, please refer to Fig. 5, which shows an exemplary schematic diagram showing a target clip of the live streaming content.

In Fig. 5, when the user's live streaming is over, a target clip, namely "BBB", can be displayed in the live streaming result information area 501. In Fig. 5, some encouraging words are displayed along with the target clip, which can facilitate the user's understanding of the displayed target clip. A comment display area 203 can be shown in Fig. 5.

In some embodiments, when the live streaming content includes singing content, that is, singing songs, the lyric fragment is the lyric corresponding to a clip in the live streaming content determined according to the real-time live streaming result information.

In some embodiments, the target clip is a clip in the live streaming content determined according to the real-time live streaming result information.

It should be noted that when the live streaming content is over, a target clip of the live streaming content can be displayed, and such the target clip can be determined according to the real-time live streaming result information, which can help users to recall some moments, such as highlight moments or moments with poor performance, in the live streaming process of the live streaming content when a song ends. Therefore, the users can be encouraged to improve the live streaming, and gain more experience from the live streaming process.

In some embodiments, the method may further include: displaying a live streaming content selection interface in response to a trigger operation on an interface entrance control displayed in the live-stream room interface; displaying a to-be-selected live streaming content identifier and historical live streaming result information corresponding to the to-be-selected live streaming content identifier in the live-stream room interface.

Here, the historical live streaming result information may include the live streaming result information generated by the user in at least one historical live streaming of the live streaming content indicated by the to-be-selected live streaming content identifier.

As an example, the user may have sung live streaming content B in Live-stream room No.1, Live-stream room No.2 and Live-stream room No.3 respectively. The historical live streaming result information of the live streaming process in the Live-stream room No.1 scores 50, the historical live streaming result information of the live streaming process in the Live-stream room No.2 scores 60, and the historical live streaming result information of the live streaming process in the Live-stream room No.3 scores 70. When a logo of the live streaming content B is displayed, the highest historical live streaming result information, such as a score of 70, can be displayed correspondingly.

It should be noted that by displaying the historical live streaming result information, the user can be provided with the historical live streaming level of the to-be-selected live streaming content by the user, so that the user hopes to live stream the live streaming content again.

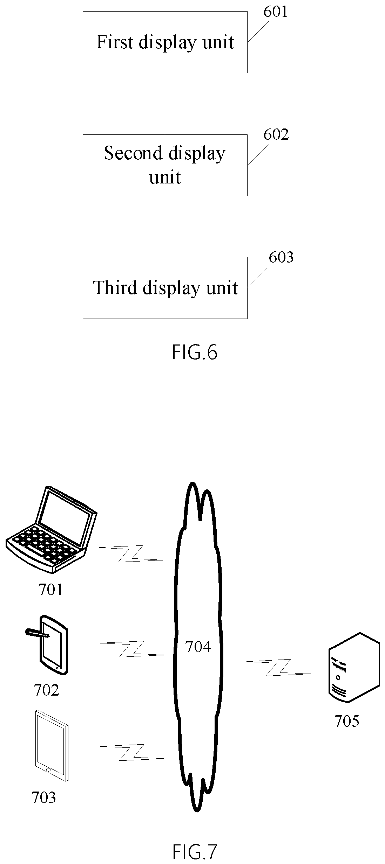

Further referring to Fig. 6, as implementation of the methods shown in the above figures, the present disclosure provides an embodiment of a live streaming processing apparatus, which corresponds to the method embodiment as shown in Fig. 1, and can be specifically applied to various electronic devices.

As shown in Fig. 6, the live streaming processing apparatus of the present embodiment includes a first display unit 601, a second display unit 602 and a third display unit 603. Among them, the first display unit configured to display a live-stream room interface;
a second display unit configured to display a first interactive control in the live-stream room interface;
a third display unit configured to update a display state of the first interactive control, according to real-time live streaming result information of live streaming content of a current live streaming object in the live-stream room.

In the embodiment, the specific processing of the first display unit 601, the second display unit 602 and the third display unit 603 of the live streaming processing apparatus and the technical effects brought thereby can refer to related descriptions of steps 101, 102 and 103 in the corresponding embodiment of Fig. 1, and will not be repeated here.

In some embodiments, the apparatus is further configured to display a first interface in response to a trigger operation on a first interactive control, wherein, the first interface displays live streaming list information corresponding to the live streaming content.

In some embodiments, the updating a display state of the first interactive control, according to real-time live streaming result information of live streaming content of a current live streaming object in the live-stream room, may include: according to the real-time live streaming result information of the live streaming content of the current live streaming object in the live-stream room, displaying the real-time live streaming result information and/or live streaming feedback information corresponding to the real-time live streaming result information on the first interactive control.

In some embodiments, the apparatus is applied to a client corresponding to the current live streaming object and/or a client corresponding to the live streamer, and the live streaming content is singing content, and the apparatus is further configured to: display a plurality of interface type identifiers, wherein the interface type identifier is used to indicate a display style of the live streaming content on the live-stream room interface, and the plurality of interface type identifiers include a result display type identifier, a stage display type identifier and a lyric display type identifier; the display a first interactive control in the live-stream room interface may include: in response to an operation of selecting the result display type identifier, displaying a first interactive control corresponding to the result display type in the live-stream room interface.

In some embodiments, the display state includes a display style; and the update a display state of the first interactive control, according to real-time live streaming result information of live streaming content of a current live streaming object in the live-stream room may include updating the display style of the first interactive control according to the updating of the real-time live streaming result information, wherein the display style includes, but not limited to, at least one of the following: control color, control shape and control size.

In some embodiments, the live streaming feedback information includes live streaming recommendation information for the live streaming content and/or the live streaming result information includes evaluation information for the live streaming content.

In some embodiments, the apparatus is applied to a client corresponding to the current live streaming object; the live streaming content comprises a plurality of clips, and the real-time live streaming result information comprises live streaming result information corresponding to the plurality of clips, and the device is also configured to display a target control corresponding to a target clip; in response to a trigger operation on the target control, displaying a recording interface for a first target clip, to re-record the first target clip.

In some embodiments, the apparatus may be further configured to: display a first interface in response to a trigger operation on the first interactive control, wherein the first interface displays activity information of the live-stream room therein.

In some embodiments, the apparatus is further configured to display a live streaming content selection interface in response to a trigger operation on an interface entrance control displayed in the live-stream room interface, wherein the live streaming content selection interface includes a second interactive control, display a second interface in response to a trigger operation on the second interactive control, wherein, the second interface may include a third interactive control and a fourth interactive control, display information about live streaming content in the live-stream room that has been selected and to be completed, in response to a trigger operation on the third interactive control; display information about live streaming content in the live-stream room that has been completed, in response to a trigger operation on the third interactive control.

In some embodiments, the apparatus is also configured to displaying a second target clip of the live streaming content in response to the end of live streaming of the live streaming content, wherein the live streaming content may include a plurality of clips, and the second target clip can be determined according to the real-time live streaming result information corresponding to the plurality of clips.

In some embodiments, when the live streaming content includes singing content, the second target clip is a lyric fragment corresponding to a clip in the live streaming content determined according to the real-time live streaming result information.

In some embodiments, the apparatus is further configured to: display a live streaming content selection interface in response to a trigger operation on an interface entrance control displayed in the live-stream room interface; display a to-be-selected live streaming content identifier and historical live streaming result information corresponding to the to-be-selected live streaming content identifier in the live-stream room interface, wherein, the historical live streaming result information may include the live streaming result information generated by the user in at least one historical live streaming of the live streaming content indicated by the to-be-selected live streaming content identifier.

In some embodiments, the live streaming content of the current live streaming includes the singing content of the current live streaming user in the live-stream room, the live streaming result information is scoring information corresponding to the singing content, and the live streaming feedback information is singing recommendation information for the singing content.

Please refer to Fig. 7, which shows an exemplary system architecture to which the live streaming processing method according to an embodiment of the present disclosure can be applied.

As shown in Fig. 7, the system architecture can include terminal devices 701, 702 and 703, a network 704 and a server 705. The network 704 is a medium for providing communication links between the terminal devices 701, 702 and 703 and the server 705. The network 704 may include various connection types, such as wired, wireless communication links or fiber optic cables, etc.

Terminal devices 701, 702, 703 can interact with the server 705 through the network 704, to receive or send messages, etc. Various client applications, such as web browser applications, search applications and news and information applications, etc., can be installed on the terminal devices 701, 702 and 703. Client applications in terminal devices 701, 702, and 703 can receive user's instructions and complete corresponding functions according to the user's instructions, such as adding corresponding information to information according to the user's instructions.

The terminal devices 701, 702 and 703 may be hardware or software. When the terminal devices 701, 702, and 703 are hardware, they can be various electronic devices provided with display screens and supporting web browsing, including but not limited to smart phones, tablet computers, e-book readers, MP3 (moving picture experts group audio layer III, 3) player, MP4 (Moving Picture Experts Group Audio Layer IV) player, laptop and desktop computer, etc. When the terminal devices 701, 702 and 703 are software, they can be installed in the electronic devices listed above. It can be implemented as multiple software or software modules (for example, software or software modules for providing distributed services) or as a single software or software module. It is not specifically limited here.

The server 705 can be a server providing various services, such as receiving information acquisition requests sent by the terminal devices 701, 702 and 703, acquiring display information corresponding to the information acquisition requests in various ways according to the information acquisition requests, and sending relevant data of the display information to the terminal devices 701, 702 and 703.

It should be noted that the live streaming processing method provided by the embodiment of the present disclosure can be executed by the terminal device, and accordingly, the live streaming processing apparatus can be arranged in the terminal equipment 701, 702 and 703. In addition, the live streaming processing method provided by the embodiment of the present disclosure can also be executed by the server 705, and accordingly, the live streaming processing apparatus can be arranged in the server 705.

It should be understood that the numbers of terminal devices, networks and servers in Fig.7 are only schematic. There can be any number of terminal devices, networks and servers, according to the needs of implementation.

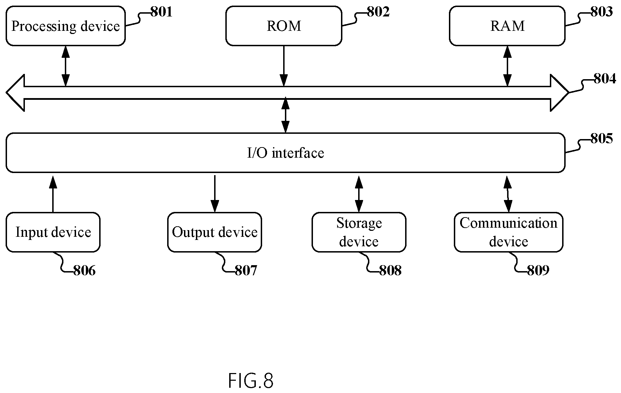

Reference is now made to Fig. 8, which shows a structural schematic diagram of an electronic device (such as a terminal device or a server in Fig. 7) suitable for implementing the embodiments of the present disclosure. The electronic devices in the embodiments of the present disclosure may include, but are not limited to, mobile terminals such as mobile phones, notebook computers, digital broadcast receivers, PDA (Personal Digital Assistant), PAD (Tablet Computer), PMP (Portable Multimedia Player), vehicle-mounted terminals (such as vehicle-mounted navigation terminals), and fixed terminals such as digital TV and desktop computers. The electronic device shown in Fig. 8 is only an example, and should not bring any limitation to the functions and application scopes of the embodiments of the present disclosure.

As shown in Fig. 8, an electronic device may include a processing device (such as a central processing unit, a graphics processor, etc.) 801, which may perform various appropriate actions and processes according to a program stored in a read-only memory (ROM)802 or a program loaded from a storage device 808 into a random-access memory (RAM)803. In the RAM 803, various programs and data required for the operation of electronic device are also stored. A processing device 801, a ROM 802 and a RAM 803 are connected to each other through a bus 804. An input/output (I/O) interface 805 is also connected to the bus 804.

Generally, the following devices can be connected to the I/O interface 805: an input device 806 including, for example, a touch screen, a touch pad, a keyboard, a mouse, a camera, a microphone, an accelerometer, a gyroscope, etc.; an output device 807 including, for example, a liquid crystal display (LCD), a speaker, a vibrator, etc.; a storage device 808 including, for example, a magnetic tape, a hard disk, etc.; and a communication device 809. The communication device 809 may allow the electronic device to communicate wirelessly or wired with other devices to exchange data. Although Fig. 8 shows an electronic device with various equipment, it should be understood that it is not required to implement or have all the devices as shown. More or fewer devices may alternatively be implemented or provided.

In particular, according to embodiments of the present disclosure, the processes described above with reference to the flowcharts can be implemented as a computer software program. For example, an embodiment of the present disclosure includes a computer program product including a computer program carried on a non-transitory computer-readable medium, which contains program codes for executing the methods shown in the flowcharts. In such an embodiment, the computer program can be downloaded and installed from the network through the communication device 809, or installed from the storage device 808, or installed from the ROM 802. When the computer program is executed by the processing device 801, the above functions defined in the methods of the embodiments of the present disclosure can be implemented.

It should be noted that the computer-readable medium mentioned above in the present disclosure can be a computer-readable signal medium or a computer-readable storage medium or any combination of such two. The computer-readable storage medium can be, for example, but not limited to, an electrical, magnetic, optical, electromagnetic, infrared, or semiconductor system, apparatus or device, or a combination of the above. More specific examples of computer-readable storage media may include, but not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, and can send, propagate or transmit a program for use by or in connection with an instruction execution system, apparatus or device. The program codes contained in the computer-readable medium can be transmitted by any suitable medium, including but not limited to wires, optical cables, RF (radio frequency) and the like, or any suitable combination of the above.

In some embodiments, the client and the server can communicate with each other by using any currently known or future to-be-developed network protocol such as HTTP (HyperText Transfer Protocol), and can be interconnected with digital data communication in any form or medium (for example, communication network). Examples of communication networks include a local area network ("LAN"), a wide area network ("WAN"), the Internet (for example, the Internet) and end-to-end networks (for example, ad hoc end-to-end networks), as well as any currently known or future to-be-developed networks.

The computer-readable medium may be included in the above electronic device; or it can exist alone without being assembled into the electronic device.

The above computer-readable medium carries one or more programs, and the one or more programs, when executed by the electronic device, cause the electronic device to: display a live-stream room interface; display a first interactive control in the live-stream room interface; update a display state of the first interactive control, according to real-time live streaming result information of live streaming content of a current live streaming object in the live-stream room.

In some embodiments, the electronic device is further configured to display a first interface in response to a trigger operation on a first interactive control, wherein, the first interface displays live streaming list information corresponding to the live streaming content.

In some embodiments, the updating a display state of the first interactive control, according to real-time live streaming result information of live streaming content of a current live streaming object in the live-stream room, may include: according to the real-time live streaming result information of the live streaming content of the current live streaming object in the live-stream room, displaying the real-time live streaming result information and/or live streaming feedback information corresponding to the real-time live streaming result information on the first interactive control.

In some embodiments, the electronic device is applied to a client corresponding to the current live streaming object and/or a client corresponding to the live streamer, and the live streaming content is singing content, and the electronic device is further configured to: display a plurality of interface type identifiers, wherein the interface type identifier is used to indicate a display style of the live streaming content on the live-stream room interface, and the plurality of interface type identifiers include a result display type identifier, a stage display type identifier and a lyric display type identifier; the display a first interactive control in the live-stream room interface may include: in response to an operation of selecting the result display type identifier, displaying a first interactive control corresponding to the result display type in the live-stream room interface.

In some embodiments, the display state includes a display style; and the update a display state of the first interactive control, according to real-time live streaming result information of live streaming content of a current live streaming object in the live-stream room may include updating the display style of the first interactive control according to the updating of the real-time live streaming result information, wherein the display style includes, but not limited to, at least one of the following: control color, control shape and control size.

In some embodiments, the live streaming feedback information includes live streaming recommendation information for the live streaming content and/or the live streaming result information includes evaluation information for the live streaming content.

In some embodiments, the electronic device is applied to a client corresponding to the current live streaming object; the live streaming content comprises a plurality of clips, and the real-time live streaming result information comprises live streaming result information corresponding to the plurality of clips, and the electronic device is also configured to display a target control corresponding to a first target clip; in response to a trigger operation on the target control, displaying a recording interface for a first target clip, to re-record the first target clip.

In some embodiments, the electronic device may be further configured to: display a first interface in response to a trigger operation on the first interactive control, wherein the first interface displays activity information of the live-stream room therein.

In some embodiments, the electronic device is further configured to display a live streaming content selection interface in response to a trigger operation on an interface entrance control displayed in the live-stream room interface, wherein the live streaming content selection interface includes a second interactive control, display a second interface in response to a trigger operation on the second interactive control, wherein, the second interface may include a third interactive control and a fourth interactive control, display information about live streaming content in the live-stream room that has been selected and to be completed, in response to a trigger operation on the third interactive control; display information about live streaming content in the live-stream room that has been completed, in response to a trigger operation on the third interactive control.

In some embodiments, the electronic device is also configured to displaying a second target clip of the live streaming content in response to the end of live streaming of the live streaming content, wherein the live streaming content may include a plurality of clips, and the second target clip can be determined according to the real-time live streaming result information corresponding to the plurality of clips.

In some embodiments, when the live streaming content includes singing content, the second target clip is a lyric fragment corresponding to a clip in the live streaming content determined according to the real-time live streaming result information.

In some embodiments, the electronic device is further configured to: display a live streaming content selection interface in response to a trigger operation on an interface entrance control displayed in the live-stream room interface; display a to-be-selected live streaming content identifier and historical live streaming result information corresponding to the to-be-selected live streaming content identifier in the live-stream room interface, wherein, the historical live streaming result information may include the live streaming result information generated by the user in at least one historical live streaming of the live streaming content indicated by the to-be-selected live streaming content identifier.

In some embodiments, the live streaming content of the current live streaming includes the singing content of the current live streaming user in the live-stream room, the live streaming result information is scoring information corresponding to the singing content, and the live streaming feedback information is singing recommendation information for the singing content.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architectures, functions and operations of possible implementations of systems, methods and computer program products according to various embodiments of the present disclosure. In this regard, each block in the flowchart or block diagram may represent a module, a program clip, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The units involved in the embodiments described in the present disclosure can be realized by software or hardware. Among them, the name of the cell does not constitute the limitation of the cell itself in some cases. For example, the selection cell can also be described as "the cell that selects the first type of pixels".

The functions described above herein may be at least partially performed by one or more hardware logic components. For example, without limitation, exemplary types of hardware logic components that can be used may include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

The above description is only the preferred embodiment of the present disclosure and the explanation of the applied technical principles. It should be understood by those skilled in the art that the disclosure scope involved in the present disclosure is not limited to the technical scheme formed by the specific combination of the above technical features, but also covers other technical schemes formed by any combination of the above technical features or their equivalent features without departing from the above disclosure concept. For example, the above features are replaced with (but not limited to) technical features with similar functions disclosed in the present disclosure.

Furthermore, although the operations are depicted in a particular order, this should not be understood as requiring that these operations be performed in the particular order shown or in a sequential order. Under certain circumstances, multitasking and parallel processing may be beneficial. Likewise, although several specific implementation details are contained in the above discussion, these should not be construed as limiting the scope of the present disclosure. Some features described in the context of separate embodiments can also be combined in a single embodiment. On the contrary, various features described in the context of a single embodiment can also be implemented in multiple embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A live streaming processing method, comprising:
displaying a live-stream room interface;
displaying a first interactive control in the live-stream room interface;
updating a display state of the first interactive control, according to real-time live streaming result information of live streaming content of a current live streaming object in the live-stream room.

2. The method of claim 1, further comprising:
displaying a first interface in response to a trigger operation on a first interactive control, wherein, the first interface displays live streaming list information corresponding to the live streaming content.

3. The method of any one of claims 1-2, wherein, the updating a display state of the first interactive control, according to real-time live streaming result information of live streaming content of a current live streaming object in the live-stream room, comprises:
according to the real-time live streaming result information of the live streaming content of the current live streaming object in the live-stream room, displaying at least one of the real-time live streaming result information and live streaming feedback information corresponding to the real-time live streaming result information on the first interactive control.

4. The method of any one of claims 1-3, wherein, the method is applied to at least one of a client corresponding to the current live streaming object and a client corresponding to the live streamer, and the live streaming content is singing content, and the method further comprises:
displaying a plurality of interface type identifiers, wherein the interface type identifier is used to indicate a display style of the live streaming content on the live-stream room interface, and the plurality of interface type identifiers include a result display type identifier, a stage display type identifier and a lyric display type identifier;
the displaying a first interactive control in the live-stream room interface, comprises:
in response to an operation of selecting the result display type identifier, displaying a first interactive control corresponding to the result display type in the live-stream room interface.

5. The method of any one of claims 1-4, wherein, the display state includes a display style; and
the updating a display state of the first interactive control, according to real-time live streaming result information of live streaming content of a current live streaming object in the live-stream room, comprise:
updating the display style of the first interactive control according to the updating of the real-time live streaming result information, wherein the display style includes at least one of control color, control shape and control size.

6. The method of any one of claims 3-5, wherein, the live streaming feedback information comprises live streaming recommendation information for the live streaming content and/or the live streaming result information comprises evaluation information for the live streaming content.

7. The method of any one of claims 3-6, wherein, the method is applied to a client corresponding to the current live streaming object; the live streaming content comprises a plurality of clips, and the method further comprises:
displaying a target control corresponding to a first target clip among the plurality of clips;
in response to a trigger operation on the target control, displaying a recording interface for the first target clip, to re-record the first target clip.

8. The method of any one of claims 1-7, further comprising:
displaying a first interface in response to a trigger operation on the first interactive control, wherein the first interface displays activity information of the live-stream room therein.

9. The method of any one of claims 1-8, further comprising:
displaying a live streaming content selection interface in response to a trigger operation on an interface entrance control displayed in the live-stream room interface, wherein the live streaming content selection interface includes a second interactive control;
displaying a second interface in response to a trigger operation on the second interactive control, wherein, the second interface may include a third interactive control and a fourth interactive control;
displaying information about live streaming content in the live-stream room that has been selected and to be completed, in response to a trigger operation on the third interactive control;
displaying information about live streaming content in the live-stream room that has been completed, in response to a trigger operation on the third interactive control.

10. The method of any one of claims 1-9, further comprising:
displaying a second target clip of the live streaming content in response to the end of live streaming of the live streaming content, wherein the live streaming content may include a plurality of clips, and the second target clip can be determined according to the real-time live streaming result information corresponding to the plurality of clips.

11. The method of claim 10, wherein,
when the live streaming content includes singing content, the second target clip is a lyric fragment in singing content determined according to the real-time live streaming result information.

12. The method of any one of claims 1-11, further comprising:
displaying a live streaming content selection interface in response to a trigger operation on an interface entrance control displayed in the live-stream room interface;
displaying a to-be-selected live streaming content identifier and historical live streaming result information corresponding to the to-be-selected live streaming content identifier in the live-stream room interface, wherein, the historical live streaming result information comprises the live streaming result information generated by the user in at least one historical live streaming of the live streaming content indicated by the to-be-selected live streaming content identifier.

13. The method of any one of claims 3-12, wherein, the live streaming content of the current live streaming object comprises the singing content of the current live streaming user in the live-stream room, the live streaming result information is scoring information corresponding to the singing content, and the live streaming feedback information is singing recommendation information for the singing content.

14. A live streaming processing apparatus, comprising:
a first display unit configured to display a live-stream room interface;
a second display unit configured to display a first interactive control in the live-stream room interface;
a third display unit configured to update a display state of the first interactive control, according to real-time live streaming result information of live streaming content of a current live streaming object in the live-stream room.

15. An electronic device comprising:
one or more processors;
a storage device for storing one or more programs,
wherein the one or more programs, when executed by the one or more processors, cause the electronic device to execute the method of any one of claims 1-13.

16. A computer-readable medium on which a computer program is stored, which, when executed by a processor, implements the method of any one of claims 1-13.

17. A computer program comprising instructions which, when executed by a processor, implement the method of any one of claims 1-13.

18. A computer program product comprising instructions which, when executed by a processor, implement the method of any one of claims 1-13.
